(19) Europäisches Patentamt
European Patent Office
Office européen des brevets

(11) Numéro de publication: **0 022 049**
**B1**

# (12) FASCICULE DE BREVET EUROPEEN

(45) Date de publication du fascicule du brevet: **25.05.83**

(51) Int. Cl.³: **C 08 G 73/12**

(21) Numéro de dépôt: **80420083.0**

(22) Date de dépôt: **02.07.80**

(54) **Procédé de préparation de polymères à groupements imide modifiés par du silicium et les polymères obtenus selon ce procédé.**

(30) Priorité: **03.07.79 FR 7917213**

(43) Date de publication de la demande: **07.01.81 Bulletin 81/1**

(45) Mention de la délivrance du brevet: **25.05.83 Bulletin 83/21**

(84) Etats contractants désignés: **BE CH DE FR GB IT LI LU NL**

(56) Documents cités:
**DE-A-1 570 659**
**US-A-3 740 305**

(73) Titulaire: **RHONE-POULENC SPECIALITES CHIMIQUES, "Les Miroirs" 18, Avenue d'Alsace, F-92400 Courbevoie (FR)**

(72) Inventeur: **Locatelli, Jean-Louis, Les Charavelles 10, rue de Charavel, F-38200 Vienne (FR)**

(74) Mandataire: **Perret, Michel et al, RHONE-POULENC RECHERCHES Centre de Recherches de Saint-Fons Service Brevets B.P. 62, F-69190 Saint-Fons (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 022 049 B1

Procédé de préparation de polyméres à groupements imide modifés par du silicium et les polyméres obtenus selon ce procédé

La présente invention concerne un procédé de préparation de polymères à groupements imide modifiés par du silicium, les polymères obtenus par le procédé ainsi que leur utilisation comme produits industriels.

On sait que l'on peut utiliser des polyimides comme matières premières de la préparation de résines thermostables. Ainsi dans le brevet français 1 555 564 on décrit des polymères thermodurcissables obtenus en faisant réagir un bis-imide d'acide dicarboxylique insaturé avec un diamine biprimaire. Dans le brevet français 2 324 684 on décrit des compositions thermodurcissables constituées d'un bis-maléimide et de N-vinylpyrrolidone-2. Le durcissement à la chaleur de ces polymères donne des résines thermostables.

Il a été trouvé selon la présente invention que l'on peut obtenir des polymères à groupements imide présentant des propriétés mécaniques intéressantes alliées à une excellente tenue au vieillissement thermique et à l'hydrolyse par chauffage d'un composé à groupements imide d'acide dicarboxylique $\alpha,\beta$-insaturé et d'un composé organosilicique hydroxylé en présence d'un catalyseur.

Plus spécifiquement, le procédé de préparation de polymères à groupements imide selon la présente invention est caractérisé en ce que l'on chauffe à une température comprise entre 50° C et 300° C:

A) Un composé à fonction imide qui peut être soit
  a) un oligoimide de formule générale:

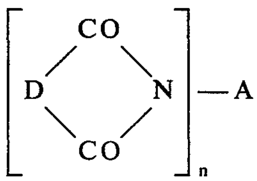

(I)

dans laquelle D représente un radical divalent qui peut être l'un des radicaux de formule:

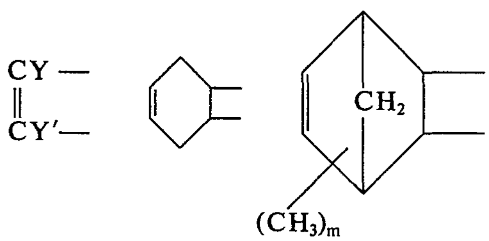

où Y et Y', identiques ou différents, représent H, $CH_5$ ou Cl et m est égal à 0 ou 1, le symbole A représente un radical organique de valence n renfermant jusqu'à 50 atomes de carbone et n représente un nombre au moins égal à 1,5 et au plus égal à 5; soit:

  b) le mélange
   – d'un oligoimide de formule générale (I):

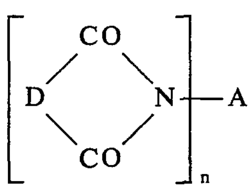

(I)

dans laquelle D, A et n, possèdent les significations indiquées ci-avant;
   – avec une polyamine de formule générale (II):

$$G(NH_2)_z \qquad (II)$$

dans laquelle G est un radical organique de valence z et z est un nombre entier au moins égal à 2,

ou le produit de la réaction dudit oligoimide (I) et de ladite polyamine (II);

B) Un composé organosilicique comportant dans sa molécule au moins un groupement hydroxyle lié un atome de silicium en présence de
C) Un dérivé imidazole.

S'agissant des oligoimides, on fait appel, de manière préférentielle à des maléimides de formule générale:

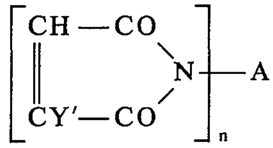

(III)

dans laquelle Y', A et n ont les significations données précédemment.

Dans les formules (I) et (III) précitées, le symbole A peut désigner un radical alcoylène ayant moins de 13 atomes de carbone, un radical phénylène, cyclohexylène, un des radicaux de formule:

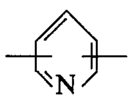 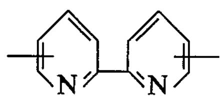 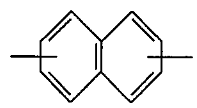 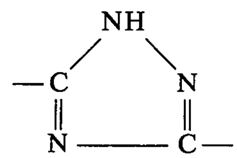

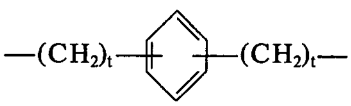

où t représente un nombre entier de 1 à 3; le symbole A peut également représenter un radical divalent ayant de 12 à 30 atomes de carbone, constitué par des radicaux phénylène ou cyclohexylène reliés entre eux par un lien valentiel simple ou par un atome ou groupement inerte tel que —O—, —S—, un groupement alcoylène ayant de 1 à 3 atomes de carbone,

—CO— —$SO_2$— —$NR_1$— —N=N— —CONH—

—P(O)—$R_1$— —CONH—X—NHCO—

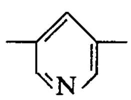 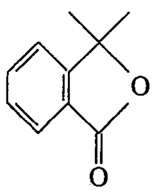 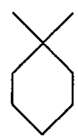 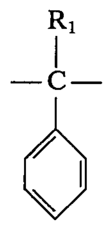 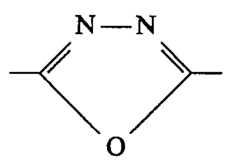

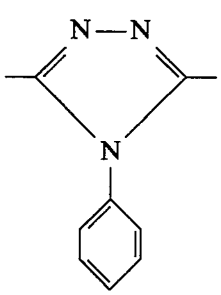 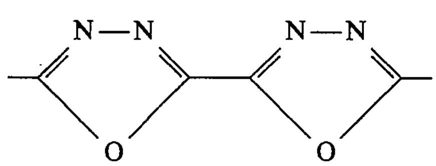 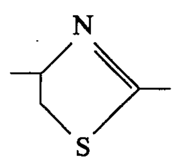

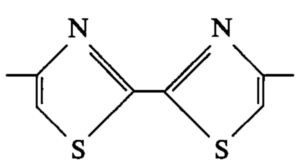 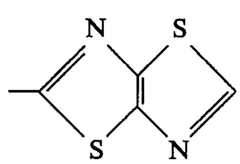

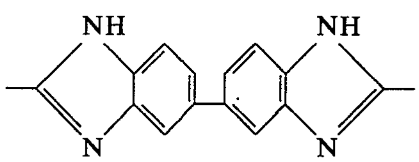

où $R_1$ représente un atome d'hydrogène, un radical alcoyle ayant de 1 à 4 atomes de carbone, phényle ou cyclohexyle, X représente un radical alcoylène ayant moins de 13 atomes de carbone. En outre, les divers radicaux phénylène ou cyclohexylène peuvent être substitués par des groupements tels que $CH_3$, $OCH_3$ ou par un atome de chlore.

Le symbole A peut également représenter un radical, renfermant jusqu'à 50 atomes de carbone, et comportant de 3 à 5 valences libres, ledit radical pouvant être constitué par un noyau naphthalénique, pyridinique ou triazinique, par un noyau benzénique pouvant être substitué par un ou trois groupements méthyle, ou par plusieurs noyaux benzèniques reliés entre eux par un atome ou groupement inerte qui peut être l'un de ceux indiqués ci-avant ou encore

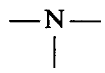 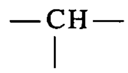 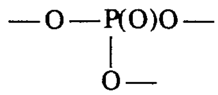

Enfin le symbole A peut représenter un radical alcoyle ou alcényle, linéaire ou ramifié pouvant renfermer jusqu'à 18 atomes de carbone, un radical cycloalcoyle renfermant 5 ou 6 atomes de carbone dans le cycle, un radical aryle mono ou bicyclique, alcoylaryle ou aralcoyle renfermant jusqu'à 18 atomes de carbone, l'un des radicaux:

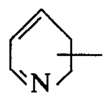 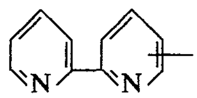 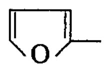 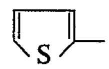

un radical monovalent constitué par un radical phényle et un radical phénylène reliés entre eux par un lien valentiel simple ou par un atome ou groupement inertes tels que $-O-$, $-S-$, un radical alcoylène ayant de 1 à 3 atomes de carbone, $-CO-$, $-SO_2-$, $-NR_1-$, $-N=N-$, $-CONH-$, $-COO-$, $-COOR_1$ où $R_1$ possède la signification indiquée ci-avant. En outre, ces divers radicaux peuvent être substitués par des atomes, radicaux ou groupements tels que F, Cl, $CH_3$, $OCH_3$, $OC_2H_5$, OH, $NO_2$, $-COOH$, $-NH-COCH_3$,

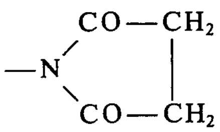

$-OCOCH_3$.

Il ressort de ce qui précède que le constituant maléimide, choisi de préférence pour la mise en oeuvre de la présente invention, peut être un polymaléimide défini ou un mélange renfermant des maléimides de fonctionnalités différentes. Dans le cas particulier où l'on utilise un mélange comprenant un monomaléimide, la proportion de ce dernier dans le mélange est, de préférence, telle que le nombre de fonctions maléimide apportées par le monomaléimide ne représente pas plus de 30% du nombre total de fonctions maléimide engagées dans la réaction.

Le maléimide de formule (II) peut notamment être un bis-imide, tel que par exemple:

- le N,N'-éthylène-bis-maléimide
- le N,N'-hexaméthylène-bis-maléimide
- le N,N'-métaphénylène-bis-maléimide
- le N,N'-paraphénylène-bis-maléimide
- le N,N'-4,4'-biphénylène-bis-maléimide
- le N,N'-4,4'-diphénylméthane-bis-maléimide
- le N,N'-4,4'-diphényléther-bis-méléimide
- le N,N'-4,4'-diphénylsulfure-bis-maléimide
- le N,N'-4,4'-diphénylsulfone-bis-maléimide
- le N,N'-4,4'-dicyclohexylméthane-bis-maléimide
- le N,N'-$\alpha$,$\alpha$'-4,4'-diméthylène cyclohexane-bis-maléimide
- le N,N'-métaxylylène-bis-maléimide
- le N,N'-paraxylène-bis-maléimide
- le N,N'-4,4'-diphényl-1,1 cyclohexane-bis-maléimide
- le N,N'-4,4'-diphénylméthane-bis-chloromaléimide
- le N,N'-4,4'-diphényl-1,1 propane-bis-maléimide
- le N,N'-4,4'-triphényl-1,1,1-éthane-bis-maléimide
- le N,N'-4,4'-triphénylméthane-bis-maléimide
- le N,N'-3,5-triazole-1,2,4-bis-maléimide
- le N,N'-dodécaméthylène-bis-maléimide
- le N,N'-triméthyl-2,2,4-hexaméthylène-bis-maléimide

- le N,N'-4,4'-diphénylméthane-bis-citraconimide
- le bis (maléimido-2 éthoxy)-1,2 éthane
- le bis (maléimido-3 propoxy)-1,3 propane
- le N,N'-4,4'-benzophénone-bis-maléimide
- le N,N'-pyridinediyle-2,5-bis-maléimide
- le N,N'-naphthylène-1,5-bis-maléimide
- le N,N'-cyclohexylène-1,4-bis-maléimide
- le N,N'-méthyl-5-phénylène-1,3-bis-maléimide
- le N,N'-méthoxy-5-phénylène-1,3-bis-maléimide

Ces bis-imides peuvent être préparés par application des méthodes décrites dans le brevet américain no 3 018 290 et le brevet anglais no 1 137 592.

Comme exemples spécifiques des mono-maléimides utilisables on peut indiquer le N-phényl-maléimide, le N-Phényl-méthylmaléimide, le N-Phényl-chloromaléimide, le N-p-chlorophényl-maléimide, le N-p-méthoxyphényl-maléimide, le N-p-méthylphényl-maleimide, le N-p-nitrophényl-maléimide, le N-p-phénoxyphényl-maléimide, le N-p-phénylaminophényl-maléimide, le N-p-phénoxycarbonylphényl-maléimide, le maléimido-1 acétoxysuccinimido-4 benzène, le maléimido-4 acétoxysuccinimido-4' diphénylméthane, le maléimido-4 acétoxysuccinimido-4' diphényl-éther, le maléimido-4 acétamido-4' diphényl-éther, la maléimido-2 acétamido-6 pyridine, le maléimido-4 acétamido-4' diphénylméthane, le N-p-phénylcarbonylphényl-maléimide.

Ces mono-imides peuvent être préparés par application de la méthode décrite dans le brevet américain n° 2 444 536 pour la préparation de N-aryl-maléimides.

Comme exemples de maléimide (III), on peut également citer les oligomères à groupements imides de formule générale:

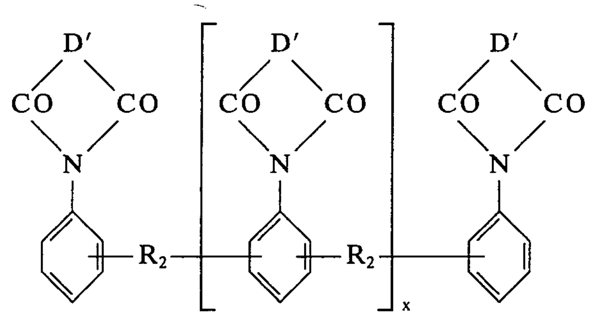

dans laquelle x représente un nombre allant de 0,1 à 2 environ, le symbole $R_2$ représente un radical hydrocarboné divalent, ayant de 1 à 8 atomes de carbone, qui dérive d'un aldéhyde ou d'une cétone de formule générale:

$$O{=}R_2$$

dans laquelle l'atome d'oxygène est lié à un atome de carbone du radical $R_2$, le symbole D' représente un radical organique divalent possèdant de 2 à 24 atomes de carbone, dont les valences sont portées par des atomes de carbone adjacents et qui dérive d'un anhydride interne de formule générale:

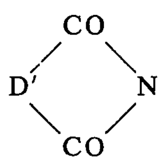

une proportion d'au moins 60% environ des radicaux D' représentant un radical de formule:

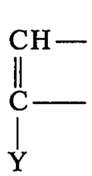

dans laquelle le symbole Y possède la signification donnée précédemment, les radicaux D' éventuellement restant pouvant notamment représenter un radical alcoylène, cycloalcoylène, aromatique carbo- ou hétérocyclique. La préparation de ces oligomères à groupements imide est décrite dans la demande de brevet allemand N° 2 230 874.

S'agissant de la polyamine de formule générale $G(NH_2)_z$, on utilise en particulier un diamine biprimaire de formule générale:
$H_2N-Q-NH_2$ (IV) dans laquelle le symbole Q peut représenter l'un des radicaux divalents que représente le symbole A.

A titre d'illustration des polyamines qui peuvent convenir dans le cadre de l'invention, on citera: le diamino-4,4' dicyclohexylméthane, le diamino-1,4 cyclohexane, la diamino-2,6 pyridine, la métaphénylène diamine, la paraphénylène diamine, le diamino-4,4' diphénylméthane, le bis (amino-4 phényl)-2,2 propane, la benzidine, l'oxyde de diamino-4,4' phényle, le sulfure de diamino-4,4' phényle, la diamino-4,4' diphényl-sulfone, l'oxyde de bis(amino-4 phényl) méthyl phosphine, l'oxyde de bis (amino-4 phényl) phényl phosphine, la N,N (amino-4 phényl) méthylamine, le diamino-1,5 naphthalène, la méthaxylylène diamine, la paraxylylène diamine, le bis (paraaminophényl)-1,1 phthalane, l'hexaméthylène diamine, le diamino-6,6' bipyridyle-2,2', la diamino-4,4' benzophénone, le diamino-4,4' azobenzène, le bis (amino-4 phényl) phényl méthane, le bis (amino-4 phényl) -1,1 cyclohexane, le bis (amino-4 méthyl-3 phényl) —1,1 cyclohexane, le bis (m-amino-phényl)-2,5 oxadiazole-1,3,4, le bis [(p-aminophényl)-2,5 oxadiazole-1,3,4, le bis] (m-aminophényl)-2,5 thiazolo-(4,5-d)thiazole, le di(m-amino-phényl)-5,5' bis (oxadiazolyle-1,3,4)-2,2', le bis (p-amino-phenyl)-4,4'-bithiazole-2,2', le m-bis [(p-aminophényl-4)-thiazolyl-2] benzène, le bis (m-aminophényl)-2,2' bibenzimidazole-5,5', le diamino-4,4' benzanilide, le diamino-4,4' benzoate de phényle, la N,N'-bis(amino-4 benzoyl) p-phénylène diamine, le bis (m-aminophényl)-3,5 phényl-4 triazole-1,2,4, le N,N' -bis (p-aminobenzoyl)diamino-4,4' diphénylméthane, le bis p-(amino-4 phénoxycarbonyl) benzène, le bis p-(amino-4 phénoxy)benzène, le diamino-3,5 triazole-1,2,4, le bis (amino-4 phényl)-1,1 phényl-1 éthane, la bis (amino-4 phényl)-3,5 pyridine, le triamino-1,2,4 benzène, le triamino-1,3,5 benzène, le triamino-2,4,6 toluène, le triamino-2,4,6 triméthyl-1,3,5 benzène, le triamino-1,3,7 naphtalène, le triamino-2,4,4' diphényle, la triamino-2,4,6 pyridine, le triamino-2,4,4' oxyde de phényle, le triamino-2,4,4' diphénylméthane, la triamino-2,4,4' diphénylsulfone, la triamino-2,4,4' benzophénone, le triamino-2,4,4' méthyl-3 diphénylméthane, la N,N,N-tri(amino-4 phényl) amine, le tri (amino-4 phényl) méthane, le triamino-4,4',4'' orthophosphate de phényle, l'oxyde de tri (amino-4-phényl) phosphine, le triamino-3,5,6' benzanilide, la mélamine, la tétraamino-3,5,3',5' benzophénone, le tétraamino-1,2,4,5 benzène, le tétraamino-2,3,6,7 naphthalène, la diamino-3,3' benzidine, le tétraamino-3,3',4,4' oxyde de phényle, le tétraamino-3,3',4,4'-diphénylméthane, la tétraamino-3,3',4,4' diphénylsulfone, la bis (diamino-3,4' phényl)-3,5-pyridine, les oligomères de formule moyenne:

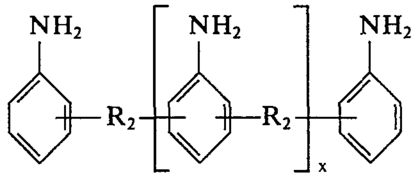

dans laquelle $R_2$ et x possèdent la signification donnée précédemment. Ces oligomères à groupements amine peuvent être obtenus selon des procédés connus tels que ceux qui sont décrits dans les brevets français n° 1 430 977, 1 481 935 et 1 533 696.

Les composés organosiliciques hydroxylés qui entrent dans le cadre de l'invention sont des composés connus répondant à la formule générale (V) suivante:

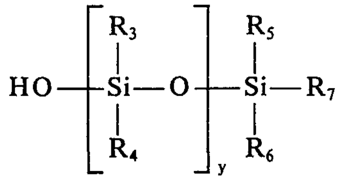

(V)

dans laquelle $R_3$, $R_4$, $R_5$, $R_6$ et $R_7$, identiques ou différents, représentent:

- un groupement hydroxyle ou un groupement du type $-OR_8$ dans laquelle $R_8$ peut être un radical alkyle, linéaire ou ramifié, ayant de 1 à 6 atomes de carbone ou un radical phényle;
- un atome d'hydrogène;
- un radical alkyle, linéaire ou ramifié, ayant de 1 à 6 atomes de carbone et pouvant être éventuellement substitué par un ou plusieurs atomes de chlore ou de fluor ou par un groupement $-CN$;
- un radical alcényle, linéaire ou ramifié, ayant de 1 à 6 atomes de carbone;
- un radical phényle, éventuellement substitué par un ou plusieurs radicaux alkyle et/ou alcoxyle ayant de 1 à 4 atomes de carbone, ou par un plusieurs atomes de chlore; et y est un nombre entier ou fractionnaire, de 0 à 1000.

Pour un composé organosilicique défini de formule (V) y est en réalité toujours un nombre entier, mais comme il s'agit en l'occurence de composés à structure polymérique (lorsque y est supérieur à 1), on a rarement un seul composé, mais le plus souvent un mélange de composés de même structure chimique, qui différent par le nombre d'unités récurrentes de leur molécule; cela conduit à une valeur moyenne de y, qui peut être entière ou fractionnaire.

On peut caractériser les composés organosiliciques hydroxylés du type précité par le rapport du poids des groupements hydroxyle qu'ils possèdent au poid total de leur molécule.

Les composés organosiliciques, auxquels on fait appel de préférence pour exécuter la présente invention, sont les composés précités pour lesquels le rapport pondéral des groupements hydroxyle dans la molécule est au moins égal à 0,05% et de préférence à 0,1%.

Parmi les composés organosiliciques appartenant à ce groupe préféré, ceux qui conviennent tout particulièrement bien sont les composés de formule (V) dans laquelle:

- $R_3$, $R_4$, $R_5$ et $R_6$, identiques ou différents, représentent un radical alkyle, linéraire ou ramifié, ayant de 1 à 6 atomes de carbone ou un radical alcényle, linéaire ou ramifié, ayant de 1 à 6 atomes de carbone ou un radical phényle;
- $R_7$ représentent un groupement hydroxyle;
- y est un nombre, entier our fractionnaire, de 0 à 250.

Il s'agit donc de silane-diols lorsque y est égal à 0 ou bien de polysiloxane-diols lorsque y est différent de 0.

Pour leur préparation on peut se reporter à l'ouvrage de W.NOLL »Chemistry and Technology of Silicones« (traduction anglaise de l'édition allemande de 1968) édité par Academic Press de New-York.

Les composés organosiliciques qui conviennent tout particulièrement bien sont choisis dans le groupe constitué par:

- le diéthylsilane-diol
- le diphénylsilane-diol
- le méthylphénylsilane-diol
- le tétraméthyl-1,1,3,3 disiloxane-diol-1,3
- le diméthyl-1,1 diphényl-3,3 disiloxane-diol-1,3
- le diméthyl-1,3 diphényl-1,3 disiloxane-diol-1,3
- l'hexaméthyl-1,1,3,3,5,5 trisiloxane-diol-1,5
- l'octaméthyl-1,1,3,3,5,5,7,7 tétrasiloxane-diol-1,7
- le décaméthyl-1,1,3,3,5,5,7,7,9,9 pentasiloxane-diol-1,9
- le dodécaméthyl-1,1,3,3,5,5,7,7,9,9,11,11 hexasiloxane-diol-1,11
- le pentaméthyl-1,3,5,7,9 pentaphényl-1,3,5,7,9 pentasiloxane-diol-1,9

ainsi que leurs homologues supérieurs correspondants.

Les composés organosiliciques hydroxylés convenant tout particulièrement bien peuvent également être des mélanges de deux ou plusieurs des composés précités. C'est ainsi que l'on peut utiliser par commodité des huiles ou résines polysiloxaniques hydroxylées du commerce. Ce sont en particulier des huiles polyméthylpolysiloxaniques-$\alpha$, $\omega$ dihydroxylées ayant de 0,2 à 0,3% en poids de groupements hydroxyle (huile de Rhône-Poulenc 48 V 500), ou 10 à 12% en poids de groupements hydroxyle (huile de Rhône-Poulenc 48 V 50) ou des huiles ou résines méthylphénylpolysiloxaniques-$\alpha,\omega$ dihydroxylées ayant 4,5% à 5% en poids de groupements hydroxyle (huile 50 606 de Rhône-Poulenc) ou de 7,5 à 8,5% en poids de groupements hydroxyle (résine 50 305 de Rhône-Poulenc); ces huiles ou résines du commerce sont données à titre d'exemple, mais il en existe d'autres pouvant convenir tout aussi bien.

Dans la description de l'invention, le terme oligoimide, le terme polyamine et le terme composé organosilicique hydroxylé englobent aussi bien chaque composés de ce type que des mélanges d'oligoimides, de polyamines ou de composés organosiliciques hydroxylés.

Lorsque les polymères selon l'invention sont préparés à partir d'un oligoimide (I) et d'un composé organosilicique hydroxylé (V) (variante 1), on choisit les quantités de réactifs de manière à avoir un rapport pondéral:

$$\frac{\text{composé organosilicique hydroxylé}}{\text{oligoimide} + \text{composé organosilicique hydroxylé}}$$

compris entre 5% et 80%.

De manière habituelle, on utilise un rapport pondéral compris entre 10% et 50%.

Une autre façon de définir les proportions relatives d'oligoimide et des composé organosilique hydroxylé consiste à indiquer le rapport entre le nombre de fonctions hydroxyle du composé organosilicique et le nombre de groupements imide de l'oligoimide. Ce rapport est, en général, compris entre 0,003 et 10, et se situe, de manière préférentielle, entre 0,01 et 2.

Lorsque les polymères selon l'invention sont préparés à partir d'un oligoimide (I), d'une polyamine (II) et d'un composé organosilicique hydroxylé (V) (variante 2), on utilise des quantités de réactifs telles que l'on ait un rapport pondéral:

$$\frac{\text{composé organosilicique hydroxylé}}{\text{oligoimide + polyamine + composé organosilicique hydroxylé}}$$

compris entre 5% et 80%. Habituellement, ce rapport pondéral se situe entre 10% et 50%.

Si l'on définit les proportions relativs des réactifs, non plus pondéralement, mais par l'intermédiaire de leurs groupements fonctionnels, le rapport entre, d'une part le nombre de fonctions hydroxyle du composé organosilicique hydroxylé et le nombre de fonctions amine de la polyamine et, d'autre part le nombre de groupements imide de l'oligoimide, est compris, généralement, entre 0,1 et 10 et se situe, de manière préférentielle, entre 0,2 et 4.

Dans le cas de la variante 2, les proportions entre le composé organosilicique hydroxylé et la polyamine sont telles que le rapport:

$$\frac{\text{nombre de fonctions hydroxyle}}{\text{nombre de fonctions amine}}$$

est compris entre 0,005 et 40 et, de préférence, entre 0,01 et 10.

Le dérivé imidazole C répond à la formule générale:

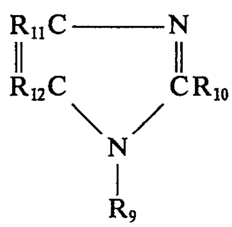

dans laquelle $R_9$, $R_{10}$, $R_{11}$ et $R_{12}$, identiques ou différents, représentent: un atome d'hydrogene, un radical alkyle ou alcoxy ayant de 1 à 20 atomes de carbone, vinyle, phényle, nitro, $R_{11}$ pouvant former avec $R_{12}$ et les atomes de carbone auxquels sont liés ces radicaux un cycle unique comme par exemple un cycle benzènique.

Comme exemples spécifiques de dérivés imidazole, on peut citer, en particulier, l'imidazole (ou glyoxaline), le méthyl-1 imidazole, le méthyl-2 imidazole, le diméthyl 1,2 imidazole, le vinyl-1 imidazole, le vinyl-1 méthyl-2 imidazole, le benzimidazole.

Le dérivé imidazole (VI) est utilisé en quantités catalytiques. Selon le dérivé utilisé, on peut choisir des teneurs allant de $1.10^{-4}$ mole à 0,1 mole par double liaison de l'oligoimide.

Le procédé selon l'invention peut être réalisé en masse en chauffant au moins jusqu'à l'obtention d'un liquide homogène le mélange constitué dans la variante 1: d'un oligoimide (I) tel que défini précédemment, d'un composé organosilicique hydroxylé (V), d'un dérivé imidazole (VI), et dans la variante 2: d'un oligoimide (I), d'une polyamine (II), d'un composé organosilicique hydroxylé (V) et d'un dérivé imidazole (VI). Dans ce qui suit, ce mélange sera désigné par l'expression »mélange des réactifs«. Avant de soumettre le mélange des réactifs au chauffage, il est avantageux d'en effectuer une homogénéisation préalable. La température de réaction se situe, en règle générale, entre 50° C et 300° C.

Le procédé selon l'invention peut également être mis en oeuvre par chauffage du mélange des réactifs au sein d'un diluant organique qui est liquide dans une partie au moins de l'intervalle 50° C—300° C. Parmi ces diluants, on peut mentionner, en particulier, des hydrocarbures aromatiques comme les xylènes et le toluène, des hydrocarbures halogénés comme les chlorobenzènes, des éthers comme le dioxanne, le tétrahydrofuranne et l'oxyde de dibutyle, le diméthylformamide, le diméthylsulfoxyde, la N-méthylpyrrolidone, la N-vinyl-pyrrolidone, le méthylglycol et la méthyl-éthyl-cétone. Les solutions ou suspensions de polymères peuvent être utilisées telles quelles pour de nombreux empois; on peut également isoler les polymères, par exemple, par filtration, éventuellement après précipation au moyen d'un diluant organique miscible avec le solvant utilisé. Dans ce contexte, on peut utiliser avantageusement un hydrocarbure dont le point d'ébullition ne dépasse pas notablement 120° C.

Les polymères visés dans la présente invention peuvent également se présenter sous l'aspect de prépolymères présentant un point de ramollissement à une température inférieure à 250° C (en général ce point de ramollissement est compris entre 50° C et 200° C). Ces prépolymères peuvent être obtenus en masse en chauffant le mélange des réactifs jusqua'à l'obtention d'un produit homogène ou pâteux à une température généralement située entre 50° C et 200° C. La prépolymérisation peut également être effectuée en suspension ou en solution dans un diluant qui est liquide dans une partie au moins de l'intervalle 50° C—200° C.

Dans le cas de la varïente 2, le rapport des groupes fonctionnels imide: amine est compris entre 1,2 : 1 et 5 : 1. A partir de tout ou partie de l'oligoimide et de la polyamine, on peut former un prépolymère qui présente un point de ramollissement généralement compris entre 50° C et 200° C, qui est ensuite mélangé au composé organosilicique hydroxylé (et éventuellement avec le restant d'oligoimide et de polyamine) et au dérivé imidazole. On peut également homogénéiser préalablement le mélange de tout ou partie de l'oligoimide et du dérivé organosilicique hydroxylé en présence du dérivé imidazole puis ajouter la polyamine, éventuellement avec le restant d'oligoimide et de dérivé organosilicique hydroxylé.

Les prépolymères peuvent être utilisés à l'état de masse liquide, une simple coulée à chaud suffisant pour la mise en forme et la réalisation d'objets moulés. On peut aussi, après refroidissement et broyage, les utiliser sous la forme de poudres qui se prêtent remarquablement aux opérations de moulage par compression, éventuellement en présence de charges à l'état de poudres, de sphères, de granules, de fibres ou de paillettes. Les prépolymères peuvent être utilisés pour la réalisation de revêtements et d'articles intermédiaires préimprégnés dont l'armature peut être constituée par des matières fibreuses à base de silicate ou d'oxyde d'aluminium ou de zirconium, de carbone, de graphite, de bore, d'amiante ou de verre. On peut encore utiliser ces prépolymères pour la réalisation de matériaux cellulaires après incorporation d'un agent porogène tel que, par exemple, l'azodicarbonamide.

Dans un second stade, les prépolymères peuvent être durcis par chauffage jusqu'à des températures de l'ordre de 350° C, généralement comprises entre 150° C et 300° C; une mise en forme comprémentaire peut être effectuée pendant le durcissement, éventuellement sous vide ou pression super-atmosphérique, ces opérations pouvant également être consécutives.

Le procédé de préparation selon l'invention et les polymères qui en résultent intéressent les domaines de l'industrie qui requièrent des matériaux doués de bonnes propriétés mécaniques ou électriques ainsi qu'une grande stabilité thermique à des températures de 200° C à 300° C, et une bonne stabilité dimensionnelle en milieu aqueux.

Leur mise en oeuvre peut se faire sous les formes les plus diverses telles que objets moulés, stratifiés, peintures, fils revêtements ... Leurs applications dans des domaines aussi variés que les industries électriques ou mécaniques, les domaines de l'isolation électrique, du chaffage par radiance, convection ou conduction, des circuits imprégnés, découlent des avantages qu'apportent leurs propriétés.

Les exemples suivants sont donnés à titre illustratifs, mais non limitatif, de l'invention.

## Exemple 1

Dans un réacteur équipé d'un agitateur et d'un dispositif de dégazage et placé dans un bain d'huile thermostaté à 155°C, on introduit 123 g de N,N'-4,4'-diphénylméthane bis-maléimide et 37 g de diphénylsilane-diol. Le mélange est agité durant 30 minutes jusqu'à l'obtention d'une masse homogène. On ajoute alors 0,224 g d'imidazole sous forme d'une solution aqueuse à 12%. Après 2 minutes d'agitation on dégaze sous pression réduite de 400 Pa pendant 8 minutes.

Le mélange limpide obtenu est immédiatement coulé dans un moule de 140 × 100 × 4 mm préchauffé à 150° C.

L'ensemble est porté durant 3 heures à 150° C puis 21 heures à 200° C.

Après démoulage, on obtient une plaque opaque, homogène, dont les propriétés sont les suivantes:

— Résistance en flexion (Rf) et Module de flexion (Mf) selon norme ASTM-D 790-63. Exprimés en Méga Pascal.

Valeurs initiales:

| | | |
|---|---|---|
| Rf | à 20° C | 102 MPa |
| | à 200° C | 76,5 MPa |
| Mf | à 20° C | 2433 MPa |
| | à 200° C | 1540 MPa |

Après vieillissement à 200° C pendant 550 heures:

| | | |
|---|---|---|
| Rf | à 20° C | 118 MPa |
| | à 200° C | 76,5 MPa |
| Mf | à 20° C | 2472 MPa |
| | à 200° C | 1746 MPa |

— Résistance au choc (Rc) selon NF T 51.017:

à 20° C 0,5 J/$cm^3$

— Gain de poids après 100 heures d'immersion dans l'eau bouillante: 2,66%.

## Exemples 2 à 9

On reproduit l'exemple 1 en utilisant différents dérivés imidazoles et en faisant varier les proportions relatives des constituants.

Les compositions et les propriétés de objets moulés obtenus sont rassemblés dans le tableau 1.

## Exemple 10

Dans le réacteur décrit à l'exemple 1, on introduit 45 g de diphénylsilane-diol que l'on chauffe à 150° C pendant 90 minutes. On obtient un oligomère titrant 0,320% en poids de fonctions hydroxyle. On ajoute sous agitation 105 g de N,N'-4,4'-diphénylméthane-bis-maléimide qui se dissout en 18 minutes puis 1,38 g de benzimidazole. On poursuit le chauffage pendant 25 minutes à 155° C sous une pression de 660 Pa.

La résine obtenue est coulée dans un moule préchauffé à 150° C. On durcit à 150° C pendant 2 heures 30 minutes, puis à 200° C pendant 21 heures.

On obtient une plaque homogène dont les propriétés sont les suivantes:

Mesures initiales:

| | | |
|---|---|---|
| — à 20° C | Rf | 81,4 MPa |
| | Mf | 1874 MPa |
| | Rc | 0,4 $J/cm^3$ |
| — à 200° C | Rf | 61,8 MPa |
| | Mf | 1255,7 MPa |

Après un séjour de 200 heures à 200° C:

| | | |
|---|---|---|
| — à 20° C | Rf | 95,2 MPa |
| | Mf | 2295,5 MPa |
| — à 200° C | Rf | 54 MPa |
| | Mf | 1815 MPa |

## Exemple 11

On fond ensemble à une température d'environ 170° C 180 g de N,N'-4,4'-diphénylméthane-bis-maléimide, 20 g d'huile méthylphénylpolysiloxanique-$\alpha,\omega$ dihydroxylée (0,324 fonction OH/100 g) et 2,254 g de benzimidazole. On agite 10 minutes à cette température, puis on dégaze sous pression réduite pendant 10 minutes.

On coule la résine obtenue dans un moule préchauffé à 150° C. On recuit 1 heure 45 minutes à 150° C puis 22 heures à 200° C. On obtient une plaque homogène dont les propriétés sont les suivantes:

Mesures initiales:

| | | |
|---|---|---|
| — à 20° C | Rf | 72,6 MPa |
| | Mf | 2040,5 MPa |
| — à 200° C | Rf | 55,4 MPa |
| | Mf | 1383 MPa |

Après un séjour de 620 heures à 200° C:

| | | |
|---|---|---|
| — à 20° C | Rf | 76,5 MPa |
| | Mf | 2040,5 MPa |

## Exemple 12

On reproduit l'exemple précédent en remplaçant l'huile polysiloxanique par la même quantité d'une résine méthylphénylsiloxanique ramifiée titrant 0,265 fonctions OH/100 g dont le point de fusion est de 67,5° C.

L'objet moulé et recuit 2 heures 30 minutes à 150° C et 22 heures à 200° C est homogène et présente les propriétés suivantes:

| | | |
|---|---|---|
| — à 20° C | Rf | 73,6 MPa |
| — à 200° C | Rf | 56,7 MPa |
| — à 20° C | Mf | 2050,3 MPa |
| — à 200° C | Mf | 1550 MPa |

Exemple 13

Dans un réacteur équipé d'un agitateur et d'un dispositif de dégazage et placé dans un bain d'huile thermostaté à 150° C, on introduit un mélange constitué par 57,3 g de N,N'-4,4'-diphénylméthane bis-maléimide, 12,7 g de diamino-4,4' diphénylméthane, 30 g de diphénylsilane-diol et 0,725 g de benzimidazole. Le mélange est agité 21 minutes; les 3 dernières minutes se déroulent sous une pression réduite de 660 Pa pour dégazer la résine.

Le mélange limpide obtenu est immédiatement coulé dans un moule de 140 x 100 x 5 mm préchauffé à 150° C. L'ensemble est porté 2 heures à 150° C, puis 22 heures à 200° C. Après démoulage on obtient une plaque opaque et homogène, elle est recuite 24 heures à 250° C.

Les propriétés sont les suivantes:

| | | |
|---|---|---|
| — à 20° C | Rf | 108 MPa |
| | Mf | 1324,4 MPa |
| — à 200° C | Rf | 56,9 MPa |
| | Mf | 1118,3 MPa |

Tableau I

| Ex. | Composition (poids en g) | | | | Propriétés mécaniques | | | | | | | | | |
|---|---|---|---|---|---|---|---|---|---|---|---|---|---|---|
| | | | | | Initiales | | | | | Après séjour de 550 heures à 200°C | | | | |
| | Bis-Imide | Silanediol | Catalyseur*) | | à 20°C | | | à 200°C | | à 20°C | | à 200°C | | $\Delta$p**) |
| | | | | | Rf (1) | Mf (1) | Rc (2) | Rf (1) | Mf (1) | Rf (1) | Mf (1) | Rf (1) | Mf (1) | |
| 2 | 62,4 | 37,6 | I | 0,115 | 98,1 | 1795,2 | 0,38 | 46,6 | 1157,6 | 87,3 | 1844,3 | 54 | 1295 | 3,24 |
| 3 | 90 | 10 | B | 1,180 | 97,1 | 2707,6 | 0,5 | 71,6 | 1971,8 | 97,1 | 2962 | | | 2,25 |
| 4 | 76,8 | 23,2 | B | 2,918 | 97,1 | 2325 | 0,47 | 72,6 | 1706,9 | 112,8 | 2756,6 | 57,9 | 1824,7 | 2,54 |
| 5 | 76,8 | 23,2 | B | 0,975 | 88,3 | 2403,5 | 0,33 | 59,8 | 1304,7 | | | | | 2,04 |
| 6 | 70 | 30 | B | 0,920 | 87,3 | 1864 | 0,40 | 57,9 | 1334,2 | 95,2 | 2403,5 | 52 | 1589,2 | |
| 7 | 62,4 | 37,6 | B | 0,788 | 81,4 | 1923 | 0,35 | 44,6 | 1000,6 | 90,3 | 2197,4 | 39,7 | 1226,3 | 1,87 |
| 8 | 62,4 | 37,6 | B | 2,370 | 84,4 | 1599 | 0,51 | 54,9 | 1128,2 | 97,1 | 1952,2 | 50 | 1255,7 | 2,15 |
| 9 | 62,4 | 37,6 | VI | 0,157 | 91,2 | 1697 | | 54,9 | 990,8 | | | | | |

*) — benzimidazole.
I — imidazole.
VI — vinyl-1 imidazole.
**) p$\Delta$ — variation en % par rapport au poids initial de l'échantillon immergé 100 heures dans l'eau bouillante.
(1) — exprimé en: Méga Pascal.
(2) — exprimé en: Joule/cm$^3$.

**Revendications**

1. Procédé de préparation de polymères à groupements imide, caractérisé en ce que l'on chauffe à une température comprise entre 50° C et 300° C:

A) Un composé à fonctions imide qui peut être soit:
   a) un oligoimide de formule générale (I):

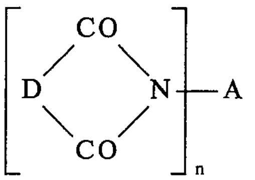

(I)

dans laquelle D représente un radical divalent qui peut être l'un des radicaux de formule:

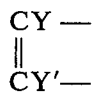 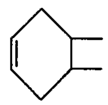 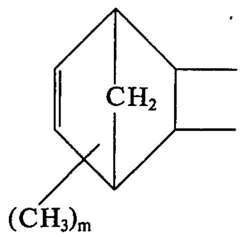

où Y et Y', identiques ou différents, représentent H, $CH_3$ ou Cl et m est égal à 0 ou 1 ; le symbole A représente un radical organique de valence n renfermant jusqu'à 50 atomes de carbone et n représente un nombre au moins égal à 1,5 et au plus égal à 5; soit:

   b) le mélange
   – d'un oligoimide de formule générale

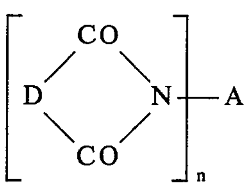

(I)

dans laquelle D, A et n, possèdent les significations indiquées ci-avant;
   – et d'une polyamine de formule générale (II):

$G(NH_2)_z$ (II)

dans laquelle G est un radical organique de valence z, et z est un nombre entier au moins égal à 2;

ou le produit de la réaction dudit oligoimide (I) et de ladite polyamine (II);

B) Un composé organosilicique comportant dans sa molécule au moins un groupement hydroxyle lié à un atome de silicium en présence de

C) Un dérivé imidazole,
l'oligoimide et le composé organosilicique étant dans des proportions telles que le rapport entre le nombre de fonctions hydroxyle du composé organosilicique et le nombre de groupements imide de l'oligoimide est compris entre 0,01 et 2, ou l'oligoimide, la polyamine et le composé organosilicique étant dans des proportions telles que l'on ait les rapports:

$$\frac{\text{nombre de fonctions hydroxyle + nombre de fonctions amine}}{\text{nombre de groupements imide}}$$ compris entre 0,1 et 10 ,

et

$$\frac{\text{nombre de fonctions hydroxyle}}{\text{nombre de fonctions amine}}$$ compris entre 0,005 et 40 ,

et

$$\frac{\text{nombre de groupements imide}}{\text{nombre de fonctions amine}} \text{ compris entre 1,2 et 5 ,}$$

et le dérivé imidazole étant utilisé en quantités de $1.10^{-4}$ mole à 0,1 mole par double liaison de l'oligoimide.

2. Procédé selon la revendication 1, caractérisé en ce que l'oligoimide utilisé est un maléimide de formule (III):

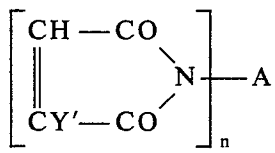

(III)

dans laquelle Y', A et n ont les significations indiquées dans la revendication 1.

3. Procédé selon la revendication 2, caractérisé en ce que le maléimide de formule (III) est le N,N'-4,4'-diphénylméthane bis-aléimide.

4. Procédé selon la revendication 1, caractérisé en ce que la polyamine, lorsqu'elle est présente dans les réactifs de base, est une diamine biprimaire de formule (IV):

$$H_2N—Q—NH_2 \qquad \text{(IV)}$$

dans laquelle le symbole Q représente l'un des radicaux que représente le symbole A.

5. Procédé selon la revendication 4, caractérisé en ce que la diamine de formule (IV) est le diamino-4,4'-diphénylméthane.

6. Procédé selon la revendication 1, caractérisé en ce que le composé organosilicique B) répond à la formule générale (V):

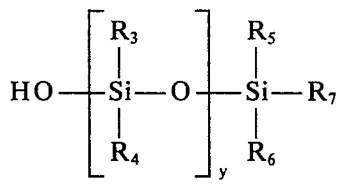

(V)

dans laquelle $R_3$, $R_4$, $R_5$, $R_6$ et $R_7$, identiques ou différents, représentent:

- un groupement hydroxyle ou un groupement du type $-OR_8$ dans lequel $R_8$ peut être un radical alkyle, linéaire ou ramifié, ayant de 1 à 6 atomes de carbone ou un radical phényle;
- un atome d'hydrogène;
- un radical alkyle, linéaire ou ramifié, ayant de 1 à 6 atomes de carbone et pouvant éventuellement être substitué par un ou plusieurs atomes de chlore ou de fluor ou par un groupement $—CN$;
- un radical alcényle, linéaire ou ramifié ayant de 1 à 6 atomes de carbone;
- un radical phényle, éventuellement substitué par un ou plusieurs radicaux alkyle et/ou alcoxyle ayant de 1 à 4 atomes de carbone ou par un ou plusieurs atomes de chlore;

et y est un nombre entier ou fractionnaire de 0 à 1000.

7. Procédé selon la revendication 6, caractérisé en ce que l'on utilise un composé organosilicique de formule (V) dans laquelle: $R_3$, $R_4$, $R_5$ et $R_6$, identiques ou différents, représentent un radical alkyle, linéaire ou ramifié, ayant de 1 à 6 atomes de carbone ou un radical alcényle, linéaire ou ramifié, ayant de 1 à 6 atomes de carbone ou un radical phényle; $R_7$ représente un groupement hydroxyle; et y est un nombre entier ou fractionnaire de 0 à 250.

8. Procédé selon la revendication 7, caractérisé en ce que le composé organosilicique est le diphénylsilane-diol.

9. Procédé selon la revendication 1, caractérisé en ce que le dérivé imidazole répond à la formule générale:

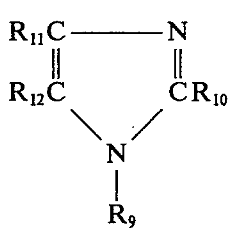

(VI)

dans laquelle $R_9$, $R_{10}$, $R_{11}$, $R_{12}$, identiques ou différents, représentent: un atome d'hydrogène, un radical alkyle ou alcoxy ayant de 1 à 20 atomes de carbone, vinyle, phényle, nitro, $R_{11}$ pouvant former avec $R_{12}$ et les atomes de carbone auxquels sont liés ces radicauc un cycle unique.

10. Procédé selon la revendication 9, caractérisé en ce que le dérivé imidazole est pris dans le groupe formé par l'imidazole, le vinyl-1 imidazole et le benzimidazole.

11. Procédé selon la revendication 1, caractérisé en ce que la réaction est effectuée en présence d'un diluant organique inerte.

12. Procédé selon la revendication 1, caractérisé en ce qu'il consiste à chauffer les réactifs à une température comprise entre 50° C et 200° C pour former dans un premier temps un prépolymère puis à provoquer le durcissement du prépolymère par chauffage à une température comprise entre 150° C et 300° C.

13. Polymères à groupements imide modifiés par du silicium obtenus selon l'une quelconque des revendications 1 à 12.

**Patentansprüche**

1. Verfahren zur Herstellung von Polymeren mit Imidgruppierungen, dadurch gekennzeichnet, daß man auf eine Temperatur zwischen 50° C und 300° C erhitzt:

A) Eine Verbindung mit Imidfunktionen, die entweder sein kann:
   a) Ein Oligoimid der allgemeinen Formel I:

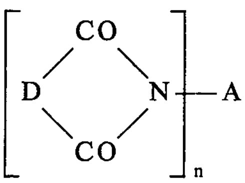

(I)

worin D einen zweiwertigen Rest bedeutet, der einer der Reste der Formel

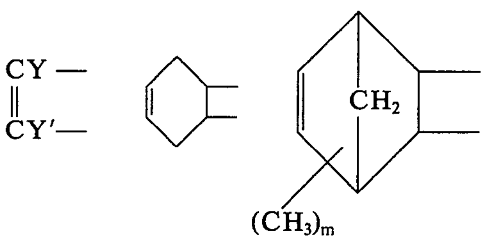

sein kann, worin Y und Y', die identisch oder verschieden sind, H, $CH_3$ oder Cl bedeuten und m gleich 0 oder 1 ist; das Symbol A einen organischen Rest der Wertigkeit n bedeutet, der bis 50 Kohlenstoffatome umfaßt, und n eine Zahl mindestens gleich 1,5 und höchstens gleich 5 bedeutet, oder

   b) das Gemisch
   – eines Oligoimids der allgemeinen Formel

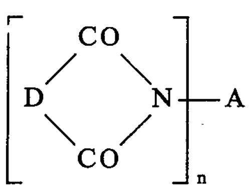

(I)

worin D, A und n die vorstehend angegebenen Bedeutungen besitzen;
   – und eines Polyamins der allgemeinen Formel II

$$G(NH_2)_z \quad \text{(II)}$$

worin G ein organischer Rest der Wertigkeit z ist und z eine ganze Zahl mindestens gleich 2 ist;

oder das Produkt der Reaktion dieses Oligoimids I und dieses Polyamins II sein kann;

B) Eine Organosiliciumverbindung, die in ihrem Molekül wenigstens eine Hydroxylgruppe, gebunden an ein Siliciumatom, trägt, in Gegenwart

C) Einem Imidazolderivat,
wobei das Oligoimid und die Organosiliciumverbindung in solchen Mengenverhältnissen vorliegen, daß das Verhältnis zwischen der Zahl der Hydroxylfunktionen der Organosiliciumverbindung und der Zahl der Imidgruppierungen des Oligoimids zwischen 0,01 und 2 liegt, oder das Oligoimid, das Polyamin und die Organosiliciumverbindung in solchen Mengenverhältnissen vorhanden sind, daß man die Verhältnisse:

$$\frac{\text{Zahl der Hydroxylfunktionen} + \text{Zahl der Aminfunktionen}}{\text{Zahl der Imidgruppierungen}} \text{ zwischen 0,1 und 10 umfassend ,}$$

und

$$\frac{\text{Zahl der Hydroxylfunktionen}}{\text{Zahl der Aminfunktionen}} \text{ zwischen 0,005 und 40 umfassend ,}$$

und

$$\frac{\text{Zahl der Imidgruppierungen}}{\text{Zahl der Aminfunktionen}} \text{ zwischen 1,2 und 5 umfassend}$$

hat, und das Imidazolderivat in Mengen von $1 \cdot 10^{-4}$ Mol bis 0,1 Mol je Doppelbindung des Oligoimids verwendet wird.

2. Verfahren gemäß Anspruch 1, dadurch gekennzeichnet, daß das verwendete Oligoimid ein Maleimid der Formel III

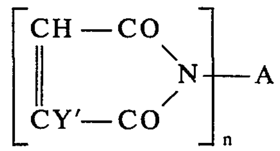

(III)

ist, worin Y', A und n die Bedeutungen, die in Anspruch 1 angegeben sind, haben.

3. Verfahren gemäß Anspruch 2, dadurch gekennzeichnet, daß das Maleimid der Formel III das N,N'-4,4'-Diphenylmethan-bis-maleimid ist.

4. Verfahren gemäß Anspruch 1, dadurch gekennzeichnet, daß das Polyamin, wenn es in den Basisreagentien vorhanden ist, ein biprimäres Diamin der Formel IV

$$H_2N-Q-NH_2 \qquad \text{(IV)}$$

ist, worin das Symbol Q einen der Reste bedeutet, den das Symbol A bedeutet.

5. Verfahren gemäß Anspruch 4, dadurch gekennzeichnet, daß das Diamin der Formel IV das 4,4'-Diamino-diphenylmethan ist.

6. Verfahren gemäß Anspruch 1, dadurch gekennzeichnet, daß die Organosiliciumverbindung B der allgemeinen Formel V

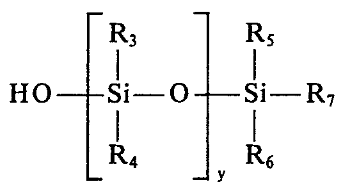

(V)

entspricht, worin $R_3$, $R_4$, $R_5$, $R_6$ und $R_7$, die identisch oder verschieden sind, bedeuten:

- Eine Hydroxylgruppe oder eine Gruppe vom Typ $-OR_8$, worin $R_8$ ein Alkylrest, gerade oder verzweigt, mit 1 bis 6 Kohlenstoffatomen, oder ein Phenylrest sein kann;
- ein Wasserstoffatom;
- einen Alkylrest, gerade oder verzweigt, mit 1 bis 6 Kohlenstoffatomen, der gegebenenfalls durch ein oder mehrere Chlor- oder Fluoratome oder durch eine Gruppe $-CN$ substituiert sein kann;
- einen Alkenylrest, gerade oder verzeigt, mit 1 bis 6 Kohlenstoffatomen;
- einen Phenylrest, der gegebenenfalls durch einen oder mehrere Alkyl- und/oder Alkoxyreste mit 1 bis 4 Kohlenstoffatomen oder durch ein oder mehrere Chloratome substituiert sein kann;

und y eine ganze oder Bruchzahl von 0 bis 1000 ist.

7. Verfahren gemäß Anspruch 6, dadurch gekennzeichnet, daß man eine Organosiliciumverbindung der Formel V verwendet, worin: $R_3$, $R_4$, $R_5$ und $R_6$, die identisch oder verschieden sind, einen Alkylrest, gerade oder verzweigt, mit 1 bis 6 Kohlenstoffatomen oder einen Alkenylrest, gerade oder verzweigt, mit 1 bis 6 Kohlenstoffatomen oder einen Phenylrest bedeutet; $R_7$ eine Hydroxylgruppe bedeutet; und y eine ganze oder Bruchzahl von 0 bis 250 ist.

8. Verfahren gemäß Anspruch 7, dadurch gekennzeichnet, daß die Organosiliciumverbindung des Diphenylsilan-diol ist.

9. Verfahren gemäß Anspruch 1, dadurch gekennzeichnet, daß das Imidazolderivat der allgemeinen Formel VI

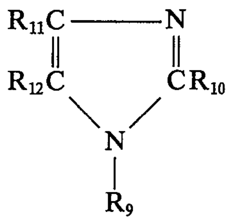

(VI)

entspricht, worin $R_9$, $R_{10}$, $R_{11}$, $R_{12}$, die identisch oder verschieden sind, bedeuten: ein Wasserstoffatom, einen Alkyl- oder Alkoxyrest mit 1 bis 20 Kohlenstoffatomen, Vinyl, Phenyl, Nitro, wobei $R_{11}$ mit $R_{12}$ und den Kohlenstoffatomen, an die diese Reste gebunden sind, einen einzigen Ring bilden können.

10. Verfahren gemäß Anspruch 9, dadurch gekennzeichnet, daß das Imidazolderivat genommen ist aus der Gruppe, gebildet durch Imidazol, 1-Vinylimidazol und Benzimidazol.

11. Verfahren gemäß Anspruch 1, dadurch gekennzeichnet, daß die Reaktion in Gegenwart eines inerten organischen Verdünnungsmittels durchgeführt wird.

12. Verfahren gemäß Anspruch 1, dadurch gekennzeichnet, daß es darin besteht, die Reaktionsteilnehmer auf eine Temperatur zwischen 50°C und 200°C zu erhitzen, um zuerst ein Prepolymeres zu bilden und dann das Härten des Prepolymeren durch Erhitzen auf eine Temperatur zwischen 150°C und 300°C zu bewirken.

13. Polymere Imidgruppen, modifiziert durch Silicium, erhalten nach einem der Ansprüche 1 bis 12.

**Claims**

1. Process for the preparation of polymers with imide groups, characterised in reacting at a temperature between 50°C and 300°C:

A) an compound with imide groups, which can be either:
   a) an oligoimide of the general formula (I):

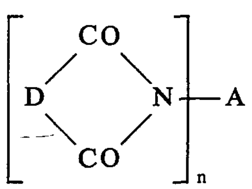

(I)

in which D represents a divalent radical which can be one of the radicals of the formulae:

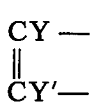

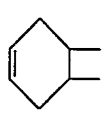

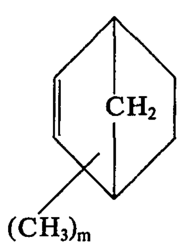

in which Y and Y', which are identical or different, represent H, $CH_3$ or Cl and m is equal to 0 or 1, the symbol A represents an organic radical of valency n, which contains up to 50 carbon atoms, and n represents a number equal to at least 1,5 and equal to at most 5, or:

b) a mixture of an oligoimide of the general formula:

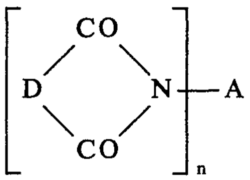

(I)

in which D, A and n possess the meanings indicated above, with a polyamine of the general formula (II):

$$G(NH_2)_z \qquad \text{(II)}$$

in which G is an organic radical of valency z, and z is an integer equal to at least 2, or the product resulting from the reaction of the said oligoimide (I) with the said polyamine (II),

B) an organosilicon compound containing, in its molecule, at least one hydroxyl group bonded to a silicon atom, in the presence of

C) an imidazole derivative, the oligoimide and the organosilicon compound being in proportions, which are such that the ratio of the number of hydroxyl groups in the organosilicon compound to the number of imide groups in the oligoimide is between 0,01 and 2, the polyamine and the organosilicon compound being in proportions which are such as to give a ratio:

$$\frac{\text{number of hydroxyl groups} + \text{number of amine groups}}{\text{number of imide groups}}:$$

of between 0,1 and 10 and a ratio:

$$\frac{\text{number of hydroxyl groups}}{\text{number of amine groups}}:$$

of between 0,005 and 40, and a ratio:

$$\frac{\text{number of imide groups}}{\text{number of amine groups}}:$$

of between 1,2 and 5,

and the imidazole derivative being used in amounts of $1.10^{-4}$ mols to 0,1 mol per double bond of the oligoimide.

2. Process according to claim 1, characterised in that the oligoimide used is a maleimide of the formula (III):

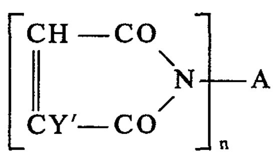

(III)

in which Y', A and n have the meanings indicated in claim 1.

3. Process according to claim 2, characterised in that the maleimide of the formula (III) is N,N'-4,4'-diphenylmethane-bis-maleimide.

4. Process according to claim 1, characterised in that, if it is present in the base reactants, the polyamine is a bis-primary diamine of the formula (IV):

$$H_2N{-}Q{-}NH_2 \qquad \text{(IV)}$$

in which the symbol Q represents one of the radicals represented by the symbol A.

5. Process according to claim 4, characterised in that the diamine of the formula (IV) is 4,4'-diaminodiphenylmethane.

6. Process according to claim 1, characterised in that the organosilicon compound B) corresponds to the general formula (V):

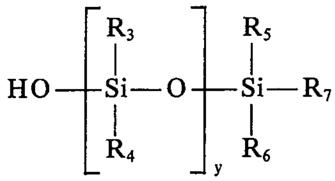

(V)

in which $R_3$, $R_4$, $R_5$, $R_6$ and $R_7$, which are identical or different, represent:

- a hydroxyl group or a group of the type $-OR_8$ in which $R_8$ can be a linear or branched alkyl radical having from 1 to 6 carbon atoms or a phenyl radical;
- a hydrogen atom;
- a linear or branched alkyl radical which has from 1 to 6 carbon atoms and can be optionally substituted by one or more chloride or fluorine atoms or by a group $-CN$;
- a linear or branched alkenyl radical having from 1 to 6 carbon atoms, or a phenyl radical which is optionally substituted by one or more alkyl and/or alkoxy radicals having from 1 to 4 carbon atoms or by one or more chlorine atoms;

and y is an integer or fraction from 0 to 1000.

7. Process according to claim 6, characterised in that the organosilicon compound used is an organosilicon compound of the formula (V) in which: $R_3$, $R_4$, $R_5$ and $R_6$, which are identical or different, represent a linear or branched alkyl radical having from 1 to 6 carbon atoms or a phenyl radical; $R_7$ represents a hydroxyl group and y is an integer or fraction from 0 to 250.

8. Process according to claim 7, characterised in that the organosilicon compound is diphenylsilanediol.

9. Process according to claim 1, characterised in that the imidazole derivative corresponds to the general formula:

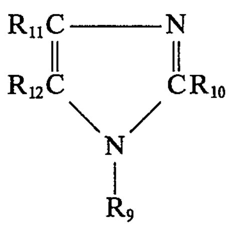

(VI)

in which $R_9$, $R_{10}$, $R_{11}$, $R_{12}$, which are identical or different, represent a hydrogen atom, an alkyl or alkyloxy radical having from 1 to 20 carbon atoms, a vinyl radical, a phenyl radical or a nitro radical, it being possible für $R_{11}$ and $R_{12}$ to form, together with the carbon atoms to which these radicals are bonded, a single ring.

10. Process according to claim 9, characterised in that the imidazole derivate is taken from the group comprising imidazole, 1 vinylimidazole and benzimidazole.

11. Process according to claim 1, characterised in that the reaction is carried out in the presence of an inert organic diluent.

12. Process according to claim 1, characterised in that it consists in heating the reactants at a temperature between 50° C and 200° C in order to form a prepolymer in a first stage, and then in curing the prepolymer by heating at a temperature between 150° C and 300° C.

13. Polymers with imide groups, modified by silicon, obtained in accordance with any one of claims 1 to 12.